# EUROPÄISCHE PATENTSCHRIFT

(11) **EP 1 203 903 B1**
(45) Veröffentlichungstag und Bekanntmachung des Hinweises auf die Patenterteilung: **23.07.2008**
(21) Anmeldenummer: 01123937.3
(22) Anmeldetag: 08.10.2001
(51) Int. Cl.: F16H 57/02

(54) **Baureihe von Antriebssystemen und Gehäuseteil**
Drive system series and casing element
Gamme de système variateur de vitesse et partie de boîtier

(30) Priorität: 03.11.2000 DE 10059503
(43) Veröffentlichungstag der Anmeldung: 08.05.2002
(73) Patentinhaber: Sew-Eurodrive GmbH & Co. KG, 76646 Bruchsal (DE)
(72) Erfinder: Bader, Antonius, 76646 Bruchsal (DE)

(56) Entgegenhaltungen:
- EP-A- 0 397 309
- EP-A- 0 898 097
- US-A- 4 586 401
- US-A- 4 649 743
- US-A- 5 624 192
- PATENT ABSTRACTS OF JAPAN Bd. 0100, Nr. 06 (M-445), 11. Januar 1986 (1986-01-11) & JP 60 168946 A (AISHIN WARNER KK), 2. September 1985 (1985-09-02)

## Beschreibung

Die Erfindung betrifft ein Antriebssystem und eine Baureihe von Antriebssystemen

Aus der Veröffentlichung Antriebstechnik 38 (1999) Nr. 1 Seite 51 - 55 ist ein Verfahren zur Schadensfrüherkennung bekannt, wobei Schwingungssensoren eingesetzt werden. Aus der Veröffentlichung Antriebstechnik 37 (1999) Nr. 6 Seite 80- 83 ist eine Wälzlagerdiagnose mit Körperschall und anderen Signalen bekannt. Solche Verfahren und Diagnosen finden immer weitere Verbreitung in Industrie-Anlagen, sind aber aufwendig und kostspielig.

Dokument EP 0898097 A1 wird als nächstliegender Stand der Technik angesehen.

Aus der EP 0 898 097 A1, insbesondere Absatz [0018], ist ein Geschwindigkeitssensor bekannt, bei dem der Sensor in ein Teil, das "cup spacer" mit Bezugszeichen 52 genannt wird, eingeschraubt wird, wobei dieses Teil aus Metallpulver (powdered metal) hergestellt ist.

Der Erfindung liegt die Aufgabe zugrunde, Körperschallmessungen an industriellen Antriebssystemen einfach und kostengünstig zu ermöglichen

Erfindungsgemäß wird die Aufgabe bei dem Antriebssystem nach der in Anspruch 1 oder 34 und bei der Baureihe von Antriebssystemen nach den in Anspruch 3 angegebenen Merkmalen gelöst.

Wichtige Merkmale bei dem Antriebssystem mit einem eine Lagerstelle aufweisenden Gehäuseteil sind, dass
mindestens ein Gehäuseteil eine plane Sensorfläche aufweist, an der ein Köperschall-Sensor anmontierbar ist,
wobei die Position der Sensorfläche derart vorgesehen ist, dass von einer ersten Lagerstelle zur Sensorfläche eine bessere Signalleitung vorhanden ist als von weiteren Lagerstellen und/oder Positionen von Signalquellen zur Sensorfläche,
**wobei die bessere Signal*leitung* durch eine Verdickung, einen Gusssteg oder eine entsprechende besondere Formung bewirkt Ist.**

**Wichtige** Merkmale der Erfindung bei der Baureihe von Antriebssystemen sind, dass mindestens ein Gehäuseteil mindestens einer Variante in der Urform mindestens eine Sensorfläche aufweist, die derart bearbeitbar ist, dass nach dieser Bearbeitung-ein Anmontieren eines Sensors ausführbar ist. Dabei umfasst die Baureihe von Antriebssystemen mindestens eine Baugröße, die mindestens eine Variante umfasst, wobei die Variante mindestens ein Gehäuseteil umfasst. Wesentlicher Vorteil der Erfindung ist, dass schon das urgeformte Gehäuseteil derart an der Position der Sensorfläche geformt ist, dass durch einfaches Bearbeiten eine Sensorfläche schnell für das Anmontieren eines Sensors fertigbar ist. Somit ist die Baureihe unabhängig von der Art der Verwendung des Gehäuseteils. Bei Anwendungen ohne Sensor muss das urgeformte Gehäuseteil nicht bearbeitet werden. Bei Anwendungen mit Sensor kann das urgeformte Gehäuseteil bearbeitet werden. Daher ist dem Kunden je nach Anwendung ein Antriebssystem lieferbar, ohne dass ein besonderes oder speziell angefertigtes Gehäuse, insbesondere als Sonderkonstruktion angefertigt werden muss; ein Bearbeiten der Sensorfläche, beispielsweise samt Einbringen einer Bohrung für einen Sensor, ist in einfacher und kostengünstiger Weise ausführbar.

Besonders vorteilhaft ist bei der Erfindung, dass im Gegensatz zum Stand der Technik die Sensorfläche an einer optimalen Position vorsehbar ist und die Gestaltung des Gehäuseteils derart ausführbar ist, dass der Sensor anmontierbar ist. Dies ist beim Stand der Technik nicht möglich, da die Gehäusewand eines Gehäuseteils so dünnwandig gestaltet ist, wie nach optimierter Auslegung gemäß Festigkeitslehre und/oder nach Optimierung des Designs, insbesondere auch nach optischen Kriterien, erlaubt ist.

Dabei ist zu beachten, dass Sensoren, insbesondere Körperschallsensoren, nur dann eine ausreichende Signalgüte aufweisen, wenn sie fest anmontiert sind. Beispielsweise ist für Sensoren, die angeschraubt werden, ein Gehäuseteil mit Sensorfläche ausführbar, die eine geeignete Bohrtiefe gestatten. Es muss dabei immer eine Mindestwandstärke eingehalten werden, damit die Gehäusefunktion aufrecht erhalten bleibt.

Außerdem ist für Körperschall, insbesondere hoher Frequenzen, eine gute Signalleitung nur bei dickeren Wandstärken oder dicken Stegen von der Signalquelle zum Sensor gegeben. Besonders vorteilhaft ist also bei der vorliegenden Erfindung, dass Stege und Verdickungen der Wand des Gehäuseteils derart vorbereitbar sind, dass ein Sensor auf Wunsch und je nach Anwendung anmontierbar ist. Außerdem ist die Position für dieses Anmontieren optimal auslegbar und ausgestaltbar, insbesondere nahe an der Signalquelle und mit Verdickungen und/oder Stegen, die die Signalleitung fördern.

Somit sind nach Anmontieren von Körperschallsensoren Körperschallmessungen an industriellen Antriebssystemen vorteilhafterweise einfach und kostengünstig ausführbar. Dazu trägt auch wesentlich bei, dass die Sensorfläche nicht gekrümmt ist oder gar Ecken aufweist.

Ein weiterer wesentlicher Vorteil der Erfindung ist, dass somit der Hersteller des Gehäuseteils oder der Antriebseinheit Referenzmessungen an einer Sensorfläche, also an einer definierten Position, ausführen kann und diese Messungen dem Kunden als Vergleichsmöglichkeit zur Verfügung stellen kann. Der Kunde kann dann die Messungen an **derselben Stelle durchführen.**

Ein weiterer wesentlicher Vorteil der Erfindung ist, dass die Position der Sensorfläche nicht verloren gehen kann, denn die Position ist unveränderlich, im Gegensatz zu beispielsweise angeklebten Sensoren des Standes der Technik, deren Position nach Abmontieren nicht genau reproduzierbar ist. Dabei ist zu beachten, dass nämlich Markierungen durch Verschmutzung, Öl, Korrosion, Reinigung oder dergleichen verloren gehen können.

Bei einer vorteilhaften Ausgestaltung weist das Gehäuseteil im Bereich der Sensorfläche eine Verdickung, insbesondere Aufdickung und/oder Erhöhung, zum Verbinden mit mindestens einem Sensor auf. Von Vorteil ist dabei, dass eine Verdickung in der Gehäusewand oder an einer Lagerstelle innerhalb der Baureihe vorgesehen ist, so dass zum Einbringen des Sensors keine speziellen Varianten zu fertigen sind. Die Verdickung ist derart vorgesehen, dass nach Einbringen einer Bohrung für den Sensor die Mindestwandstärke vorhanden ist. Der Sensor ist dabei immer der Baureihe zugeordnet. Beispielsweise ist bei einer Baureihe nur ein Sensor verwendbar, der maximal eine M8 Bohrung aufweist. Kleinere Sensoren sind natürlich auch verwendbar. Wegen dieser Zuordnung des Sensors zu der Baureihe sind von der Erfindung auch Baureihen umfasst, die in einer großen Baugröße ihrer Baureihe keine speziellen Verdickungen aufweisen, da die Wandstärke ausreichend dick ist, und in einer kleineren Baugröße spezielle Verdickungen aufweisen, so dass derselbe Sensor anmontierbar ist unter Einhaltung der Mindestwandstärke

Bei einer vorteilhaften Ausgestaltung weist das Gehäuseteil mindestens einen Steg oder eine längliche Verdickung, insbesondere zum Durchleiten von Körperschall, auf, die von der Sensorfläche zu einer Lagerstelle führt. Von Vorteil ist dabei, dass der Körperschall durch den Steg oder die Verdickung sehr gut durchleitbar ist. Durch das Vorsehen spezieller Stege und zugeordneten Sensorflächen ist ohne weiteren speziellen Aufwand ein Sensor je nach Kundenwunsch und durch die Anwendung bedingter Anforderung anbringbar.

Bei einer vorteilhaften Ausgestaltung weist das Gehäuseteil mindestens einer Variante nach dem Gießen eine Sensorfläche auf, die derart bearbeitbar ist, dass nach der Bearbeitung ein Anmontieren mindestens eines Sensors ausführbar ist. Von Vorteil ist dabei, dass schon bei der Gussform die Wand des Gehäuseteils und Stege und/der Verdickungen des Gehäuseteils derart gebildet werden, dass nach Bearbeitung der Sensorfläche der Sensor anmontierbar ist und ein besonders gutes Signal-/Rausch-Verhältnis aufweist

Bei einer vorteilhaften Ausgestaltung ist das Bearbeiten entweder ein Entfetten, ein Aufrauen oder mindestens eine spanende Bearbeitung, wie Fräsen, Drehen, Schleifen, Bohren, Feilen, Abschmirgeln, Gewindeschneiden, Hobeln. Von Vorteil ist dabei, dass entweder ein Ankleben eines Sensors ermöglicht ist, wozu ein Entfetten und/oder ein Aufrauen der Gussform notwendig ist, oder ein Anschrauben, wozu eine spanende Bearbeitung, insbesondere das Anbringen einer Gewindebohrung notwendig ist. Darüber hinaus ist vorteilhafterweise sogar ein magnetisches Montieren ermöglicht, wozu eine Glättung der Sensorfläche mittels spanender Bearbeitung notwendig ist und eine Sensorfläche aus ferromagnetischem Material gefertigt ist.

Beim Anschrauben der Sensoren sind als Vorteile der Erfindung die Temperaturstabilität, die Langzeitstabilität, die mechanische Stabilität bei Transport, Schlägen, Service, Montage oder dergleichen, die Öl-Stabilität bei Leckage und die im Vergleich zu nur magnetisch anmontierten Sensoren bessere Signalgüte, also besseres Signal-/Rausch-Verhältnis, zu nennen. Außerdem ist beim Anschrauben vorteilhafterweise eine Trittfestigkeit erreichbar.

Bei einer vorteilhaften Ausgestaltung ist das Gehäuseteil im Bereich der Sensorfläche derart verdickt, dass eine Bohrung derart tief ausführbar ist, dass ein Sensor mittels Anschrauben an das Gehäuseteil anmontierbar ist. Dazu kann das Gehäuseteil im Bereich der Sensorfläche derart verdickt werden, dass eine Bohrung tiefer ausführbar ist als die größte Dicke des Gehäuseteils in unmittelbarer Umgebung des Bereiches der Sensorfläche. Von Vorteil ist dabei, dass bei der entsprechenden Variante das Anschrauben ermöglicht ist, ohne ein Loch in die Gehäusewand bohren zu müssen, das zu Undichtigkeiten führt.

Bei einer vorteilhaften Ausgestaltung weist die Sensorfläche Mittel zur Zentrierung, wie urgeformte Vertiefung, für das Anbringen einer Bohrung auf. Von Vorteil ist dabei, dass das Anbringen der Bohrung einfach und sicher erfolgt.

Bei einer vorteilhaften Ausgestaltung ist das Gehäuseteil im Bereich der Sensorfläche derart magnetisch und/oder ferromagnetisch und/oder umfasst ein magnetisches Teil, dass ein Sensor magnetisch an das Gehäuseteil angezogen wird und/oder anmontierbar ist. Von Vorteil ist dabei, dass auch eine schnell lösbare, schnelle und kostengünstige Montage ermöglicht ist.

Bei einer vorteilhaften Ausgestaltung weist das Gehäuseteil Eisen auf oder ist aus Aluminimumdruckguss. Von Vorteil ist dabei, dass bei Verwendung von Eisen ein magnetischer Sensor anbringbar ist, da eine magnetische anziehende Kraft ausbildbar ist und dass bei Verwendung von Aluminium in oder am Aluminium, insbesondere auf der Innenseite des Gehäuseteils ein Magnet anbringbar ist, der einen ferromagnetischen und/oder permanentmagnetischen Sensor anzieht und hält.

Bei einer vorteilhaften Ausgestaltung umfasst das Gehäuseteil mindestens eine Lagerstelle. Von Vorteil ist dabei, dass eine effektive Signalquelle für Körperschall vorhanden ist, da Lager Körperschall generieren. Vorteiligerweise ist der Körperschall zum Überwachen des Lagers verwendbar.

Bei einer vorteilhaften Ausgestaltung ist die Position der Sensorfläche derart, dass von der Lagerstelle zur Sensorfläche eine bessere Signalleitung vorhanden ist als von der Lagerstelle zu mindestens einer anderen Position an der Außenfläche des Gehäuseteils. Außerdem ist bei einer weiteren vorteilhaften Ausgestaltung die Position der Sensorfläche derart gelegt, dass von einem ersten Lagerstelle zur Sensorfläche eine bessere Signalleitung vorhanden ist als von weiteren Lagerstellen und/oder Positionen von Signalquellen zur Sensorfläche. Von Vorteil ist dabei, dass das Signal eines Lagers selektiv überwachbar ist und somit das Gehäuseteil eine spezifisch für Überwachung des entsprechenden Lagers verwendbare Sensorfläche aufweist.

Bei einer vorteilhaften Ausgestaltung ist die bessere Signalleitung durch eine Verdickung, einen Gusssteg oder eine besondere Formung bewirkt. Von Vorteil ist dabei, dass in einfacher und kostengünstiger Weise schon bei der Konstruktion das Gehäuseteil vorteilhaft für die Signalüberwachung, insbesondere Kärperschallüberwachung, auslegbar ist.

Bei einer vorteilhaften Ausgestaltung ist die Position der Sensorfläche derart, dass vom Lagerstelle zur Sensorfläche keine Fügestellen vorhanden sind. Von Vorteil ist dabei, dass Körperschall nur wenig abgedämpft wird.

Bei einer vorteilhaften Ausgestaltung ist die Position der Sensorfläche derart, dass Signale der ersten Lagerstelle oder einer ersten Gruppe von Lagerstellen selektiv detektierbar sind. Von Vorteil ist dabei, dass keine gegenseitigen Störungen auftreten.

Bei einer vorteilhaften Ausgestaltung weist die Sensorfläche Mittel zur Identifikation oder Bezeichnung auf und/oder steht mit Mitteln zur Identifikation oder Bezeichnung direkt in Verbindung. Von Vorteil ist dabei, dass die Sensorfläche eindeutig identifizierbar ist und die Messergebnisse exakt zuordenbar sind. Somit ist nicht nur eine ständige Online-Messung ausführbar, sondern auch ein Messen von Zeit zu Zeit, wobei in gewissen zeitlichen Abständen Messungen unter Verwendung eines auf die Sensorfläche anmontierten Sensors durchgeführt werden und die erhaltenen Messdaten verglichen werden mit den früher, an derselben Sensorfläche ermittelten Messdaten. Weiter vorteilhaft ist dabei, dass auch der Sensor für jede derartige Messung abmontierbar ist und somit Kosten einsparbar sind.

Bei einer vorteilhaften Ausgestaltung sind die Mittel zur Identifikation oder Bezeichnung mindestens eine Beschriftung, eine Nummerierung, Etikettierung, Stempelung, Bedruckung, ein Typenschild und/oder ein berührungsloses Identifikationssystem mit Oberflächenwellensensoren oder mit Transpondern. Von Vorteil ist dabei, dass sogar berührungslos arbeitende kostengünstige passive Systeme verwendbar sind. Insbesondere die Oberflächenwellensensoren oder die Transponder werden nämlich berührungslos beim Abfragen mit Energie versorgt und benötigen daher keine Batterie oder dergleichen.

Bei einer vorteilhaften Ausgestaltung weist die Sensorfläche Mittel zur Zugentlastung, insbesondere für ein Sensoranschlusskabel auf. Von Vorteil ist dabei, dass die Sensorfläche auch zusätzliche mechanische Funktionen ermöglicht.

Bei einer vorteilhaften Ausgestaltung ist der Sensor ein Körperschallsensor. Von Vorteil ist dabei, dass direkt am Lager entstehende Vorgänge, wie Alterung oder Zerstörung in einfacher Weise und ohne wesentliche Zeitverzögerung detektierbar sind.

Bei einer vorteilhaften Ausgestaltung ist der Sensor derart gestaltet, dass Körperschall mit mindestens einer Frequenz aus dem Bereich von 1 Hz bis 10 MHz detektierbar ist. Von Vorteil ist dabei, dass Schwingungssensoren und Körperschallsensoren aus dem Ultraschallbereich verwendbar sind. Je nach Frequenz sind somit die verschiedensten Zustände und/oder Schäden des Systems beobachtbar.

Bei einer vorteilhaften Ausgestaltung ist ein erster Sensor ein Körperschallsensor und ein zweiter Sensor ein Thermodraht. Bei einer weiteren vorteilhaften Ausgestaltung sind an einer Sensorfläche mehrere Sensoren, wie mindestens ein Körperschallsensor, mindestens ein Thermosensor und/oder mindestens ein Ölzustandssensor, anmontierbar. Von Vorteil ist dabei, dass Multisensoranwendungen ausführbar sind, womit also auch die verschiedensten physikalischen Informationen miteinander koppelbar sind.

Bei einer vorteilhaften Ausgestaltung weist das Gehäuseteil mindestens zwei, zueinander parallele und derart angeordnete Sensorflächen auf, dass die Bearbeitung gleichzeitig, insbesondere mit einer Mehrspindelmaschine, ausführbar ist. Bei einer anderen vorteilhaften Ausgestaltung liegt mindestens eine Sensorfläche in einer Ebene mit Fußflächen des Getriebes und ist somit gleichzeitig mit des Fußflächen bearbeitbar. Von Vorteil ist dabei, dass eine schnelle und kostengünstige Bearbeitung der Sensorflächen ausführbar ist.

Bei einer vorteilhaften Ausgestaltung befinden Sensorflächen bei verschiedenen Varianten und/oder Baugrößen sich derart an derselben geometrischen Position, dass für die verschiedenen Varianten und/oder Baugrößen dieselben Mittel zur Bearbeitung und Mittel zum Ablesen von Informationen verwendbar sind. Von Vorteil ist dabei, dass kostengünstigerweise nur jeweils ein Gerät zum Ablesen von Informationen angeschafft werden muss.

Bei einer vorteilhaften Ausgestaltung ist mindestens als Sensorfläche eine Fußfläche des Getriebes ausgeführt. Von Vorteil ist dabei, dass bei einer Montagerichtung des Getriebes, also räumlichen Lage des Getriebes, eine Fußfläche unbenutzt und somit frei zugänglich bleibt, wodurch diese bei dieser räumlichen Orientierung als Sensorfläche ohne zusätzlichen Aufwand verwendbar ist. Dabei ist wichtig, dass ein Getriebe für mehrere räumliche Orientierungen Fußflächen aufweist. Bei der vorliegenden Erfindung ist aber zusätzlich eine Fußfläche derart gestaltet, dass sie als Sensorfläche verwendbar ist. Beispielsweise sind also Verdickungen oder Stege oder dergleichen ausgeführt.

Bei einer vorteilhaften Ausgestaltung beträgt eine Bohrtiefe für eine Gewindebohrung zum Anschrauben eines Sensors an der Sensorfläche mindestens 15 mm. Von Vorteil ist dabei, dass Sensoren, insbesondere nach Norm, derart stabil befestigbar sind, dass ein gutes Signal-/Rausch-Verhältnis erreichbar ist. Bei einer geringeren Bohrtiefe, beispielsweise nur 5 mm ergäben sich nur eine schwache Anpresskraft und somit würde beim Übergang von der Sensorfläche zum Sensor das Signal-/Rausch-Verhältnis stark verschlechtert.

Bei einer vorteilhaften Ausgestaltung genügt die Bohrtiefe für eine Gewindebohrung zum Anschrauben eines Sensors an der Sensorfläche der DIN 76. Von Vorteil ist dabei, dass das Gewinde am Sensor vollbelastbar ist.

Bei einer vorteilhaften Ausgestaltung ist die Bohrtiefe größer als mindestens 8mm, insbesondere 14 mm, für eine Gewindebohrung zum Anschrauben eines Sensors an der Sensorfläche. Von Vorteil ist dabei, dass Trittfestigkeit erreichbar ist.

Weitere vorteilhafte Ausgestaltungen ergeben sich aus den Unteransprüchen. Wesentliche Merkmale der Erfindung bei dem Gehäuseteil eines Antriebssystems, wobei das Gehäuseteil eine Lagerstelle umfasst, sind, dass das Gehäuseteil eine Sensorfläche zum Anmontieren eines Sensors aufweist, wobei das Gehäuseteil im Bereich der Sensorfläche eine größere Dicke aufweist als die Dicke, die sich nach der Festigkeitslehre unter Minimierung des eingesetzten Materials und/oder nach Ausführen von Industrie-Design ergibt. Von Vorteil ist dabei, dass die größere Dicke ein Anmontieren des Sensors, beispielsweise durch Anschrauben, ermöglicht und/oder eine bessere Signalleitung von der Signalquelle zum Sensor ermöglicht.

### Bezugszeichenliste

- 11,12,13,14,15,16,17,18,19: Positionen für Sensorflächen
- 21, 31: Gehäuseteil
- 22, 32: Außenseite
- 23, 33: Erhöhung
- 24, 34: Gewindebohrung
- 25, 35: Sensorfläche
- 26, 36: Innenseite
- 27,37: Aufdickung
- 38: Lagerstelle
- 39: Steg
- 41: Welle
- 42: Lager
- 43: Sensorfläche
- 44: Gehäuseteil
- 51: Gehäuse
- 52: Lager
- 53: Lagerstelle
- 54: Wand
- 55: Sensorfläche
- 56: Gewindebohrung
- 57: Welle
- 58: Steg
- 59: Aufdickung
- 60: Gehäuse
- 61, 65: Umleitender Steg
- 62, 63, 66, 68: Sensorflächen ..
- 64, 67: Steg
- 69: Lagerstelle
- 70: Gehäuse
- 71: Lagerstelle
- 72, 74, 75, 76: Sensorfläche
- 73: Steg
- 80: Gehäuse
- 81: Sensorfläche
- 82: Stegbohrung
- 83: Lagerstelle

Die Erfindung wird nun anhand von Abbildungen näher erläutert.

Die erfindungsgemäße Baureihe von Antriebseinheiten, wie Getriebe, Motoren oder Getriebemotoren, umfasst mehrere Baugrößen, die wiederum jeweils verschiedene Varianten umfassen. Dabei ist jeweils eine Variante mindestens gekennzeichnet durch,
- die Art des Getriebes, beispielsweise mindestens eine Stirnradgetriebestufe, eine Planetengetriebestufe, eine Spiroplangetriebestufe, eine Verstellgetriebestufe, eine Winkelgetriebestufe, eine Kegelgetriebestufe, die Anzahl und Arten der Stufen, die Verzahnungsparameter, die geometrischen Daten und Abmessungen,
- und/oder die Art des Motors, beispielsweise einen Bremsmotor, einen Motor ohne Bremse, einen Reluktanzmotor, einen Synchronmotor, einen Asynchronmotor.

Je nach industrieller Anwendung oder Anlagentyp wird eine Variante eingesetzt, die einen oder mehrere Sensoren verwendet oder nicht. Als Sensoren sind hauptsächlich Körperschallsensoren einsetzbar, insbesondere zur Überwachung von Lagerschäden. Die Sensoren sind elektrisch mit einer elektronischen Schaltung, wie Umrichter, Bus- oder Feldbusteilnehmer zur Weiterverarbeitung und/oder Auswertung der detektierten Informationen verbunden. Zusätzlich verwendbare Sensoren sind Thermosensoren und/oder Ölzustandssensoren.

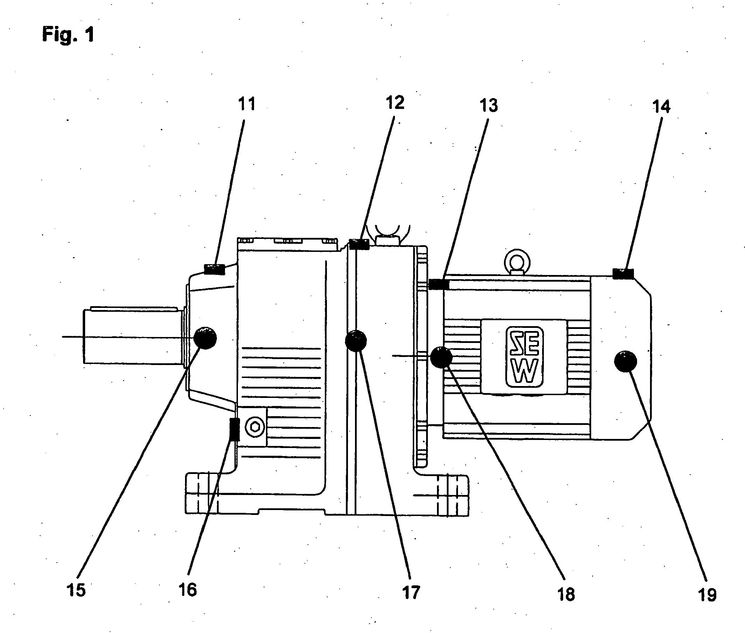

Figur 1 zeigt als erfindungsgemäßes Ausführungsbeispiel eine Variante einer Baugröße der erfindungsgemäßen Baureihe. Dabei ist das Gehäuseteil derart konstruiert, dass dieselben gegossenen Gehäuseteile der Baureihe verwendbar sind für Varianten mit oder ohne bearbeitete Sensorflächen. Also ist das Gehäuseteil der Baureihe ohne großen Mehraufwand zum Anbringen von Sensoren abänderbar.

Bei der Erfindung ist das Gehäuseteil an der jeweiligen Position der Sensorflächen nach dem Gießen so geformt, dass es dort bearbeitbar ist. D.h., dass die gegossene Form des Gehäuses an der jeweiligen Position eine ebene Sensorfläche derart aufweist, dass ein Bearbeiten mit spanender Bearbeitung ausführbar ist. Resultat der spanenden Bearbeitung ist entweder eine plane Sensorfläche mit einer Oberflächengüte, die der für die Funktionsweise des Sensors erforderliche Oberflächengüte entspricht, oder eine Sensorfläche, die eine Gewindebohrung zum Einschrauben des Sensors aufweist. Bei anderen Sensoren ist eine Klebeverbindung mit dem gegossenen Gehäuseteil erforderlich, wobei dabei die Sensorfläche entfettet und/oder abgeschmirgelt wird.

Figur 1 zeigt die Positionen für Sensorflächen 11-19 an einem Antriebssystem, umfassend Getriebe und Motor. Sie liegen derart, dass die Bedingungen für ein verwendbares und ausreichendes Signal-Rausch-Verhältnis des Sensorsignals vorhanden sind. Eine Lagerstelle ist eine Signalquelle für das Signal Körperschall. Dieser Körperschall breitet sich je nach Frequenz meistens vorzugsweise entlang Bereichen höherer Materialstärke aus. Die Positionen liegen möglichst nahe an die Lagerstellen da an diesen Stellen Schwingungen von Verzahnungseingriffen und Schwingungen des Lagers selbst in das Getriebegehäuse geleitet werden. Der Signalweg von der Körperschallquelle zum Sensor ist möglichst kurz und ohne Fügestellen zur Lagerstelle ausgeführt.

Die Positionen 11, 15 liegen nahe am Bereich des Lagers der Abtriebswelle des Getriebes. Hier treten auch Querkräfte oder Axialkräfte auf, die von der angetriebenen Vorrichtung aufs Getriebe wirken können und das Lager belasten. Somit kann das Lager bei zu großen Querkräften und/oder Axialkräften in schadhafte Betriebszustände gelangen und/oder schneller altern. Eine Detektion des Körperschalls dieses Lagers ist daher verwendbar zur Überwachung der Alterung, des Verschleißes und der Belastung. Jedoch sind die erhaltenen Signal-/Rausch-Verhältnisse abhängig von der Qualität des Körperschalls. Dadurch, dass die Positionen 11,15 in direkter Nähe des Lagers der Abtriebswelle angeordnet sind, ist ein besonders gutes Signal-/Rausch-Verhältnis erreichbar. Die Positionen 12 und 17 befinden sich in direkter Nähe zu einem weiteren Lager des Getriebes, insbesondere Mittelwandlager. Somit ist auch hierbei ein besonders gutes Signal-/Rausch-Verhältnis für dieses Lager erreichbar.

Die Positionen 13 und 18 befinden sich in direkter Nähe am abtriebsseitigen Lager des Motors. Die Positionen 14 und 19 befinden sich in direkter Nähe eines weiteren Lagers des Motors, dem die elektromagnetisch betätigbare Bremse des Motors nachfolgend angeordnet ist, wobei die Bremse mindestens eine Mitnehmerverzahnung und einen Bremsbelagträger umfasst. Somit können mit Sensoren auf den Sensorflächen der Positionen 14, 19 nicht nur von dem weiteren Lager des Motors stammende Signale detektiert werden, sondern auch Signale, die von der Bremse als weitere Signalquelle für Körperschall stammen. Dabei werden nicht nur beim Bremsen entstehende Geräusche detektierbar, sondern auch Geräusche, die, angeregt durch minimale Gleichlaufschwankungen, durch ein - wenn auch geringstes - Spiel der Mitnehmerverzahnung entstehen. Solche pro Sekunde häufig auftretenden Gleichlaufschwankungen, also geringste Beschleunigungen und Abbremsungen, sind immer vorhanden. Bei Versorgung des Elektromotors durch einen Umrichter können insbesondere bei Netzüberlastung oder anderen außergewöhnlichen Belastungen größere Gleichlaufschwankungen auftreten. Aber auch schadhafte Lager oder andere schadhafte Teile können Gleichlaufschwankungen verstärken. Somit sind mit der Überwachung des Körperschalls auch gefährliche Betriebszustände detektierbar.

Je nach Einbaulage des gesamten, in der Figur 1 gezeigten Getriebemotors und je nach der Umgebung des Getriebemotors ist beispielsweise eine Seite unzugänglich, beispielsweise die Seite, auf der sich die Positionen 15, 17, 18 und 19 befinden. Dafür ist dann eine andere Seite zugänglich, umfassend beispielhaft die Positionen 11, 12, 13, 14.

Position 16 ist direkt nahe an einem Lager einer Zwischenwelle angeordnet. Somit ist auch eine Überwachung eines solchen Lagers ermöglicht.

In verschiedenen Ausführungsbeispielen sind jeweils eine oder mehrere oder sogar alle Positionen für Sensorflächen verwendbar. Außerdem werden je nach Anwendung alle Sensorflächen mit Sensoren bestückt oder es bleiben einige Sensorflächen ohne Sensoren. Somit ist die erfindungsgemäße Ausführungsform flexibel anpassbar an die jeweilige Anwendung.

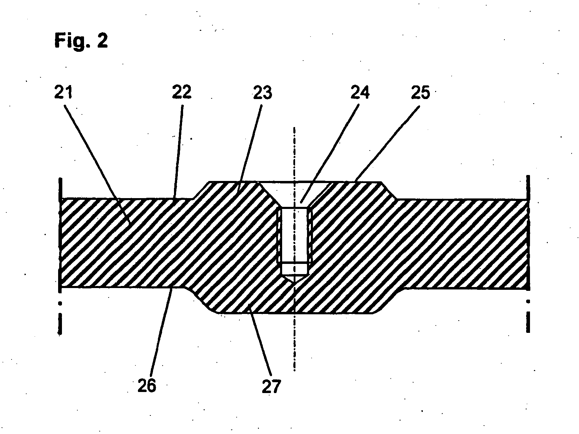

Figur 2 zeigt eine erfindungsgemäße Ausgestaltung einer Sensorfläche. Die Dicke der Wand des Gehäuseteils 21 ist einerseits bestimmt durch Minimalforderungen der Festigkeitslehre und andererseits durch die Minimierung des Materials aus Gründen zur Einsparung von Gewicht und Kosten. Bei industriellen Antrieben im Bereich von 0,1kW bis 1000 kW ergeben sich somit Dicken im Bereich einiger Millimeter. Bei Grauguss ist allein wegen des Gießverfahrens eine Wandstärke von mindestens 4mm notwendig. Bei größerer zu übertragender Leistung und bei größeren zu übertragenden Momenten ist eine größere Wandstärke notwendig, die aber durch Einsparung an Material möglichst klein gewählt ist. Beispielsweise sind bei einem zu übertragenden Moment von 50 000 Nm 18mm notwendig.

Ein mit anzumontierender Sensor erfordert jedoch eine Gewindebohrung mit einer großen Bohrtiefe. Möglich ist beispielsweise bei einer Befestigung mit einem Gewinde M3 nach DIN 76 in Grauguss eine Bohrtiefe von 8mm notwendig. Allerdings ist für Industrietauglichkeit der Sensoren ein Gewinde M8 notwendig, wobei dadurch eine Trittfestigkeit erreichbar ist. D.h., dass der Sensor derart fest verschraubbar ist, dass das Körperschallsignal auch unter Trittbelastung, also ein Auftreten durch eine Person, ausreichend gut von der Sensorfläche an den Sensor übertragen wird. Für ein Gewinde M8 ist aber nach DIN 76 in Grauguss eine Bohrtiefe von 18mm notwendig. Außerdem ist eine Restwandstärke von 2mm notwendig aus Dichtheits- und Festigkeitsgründen.

Bei industrietauglichen Körperschallsensoren ist also ein Anmontieren an eine Wand eines Gehäuseteils nach Stand der Technik nicht ohne Weiteres möglich. Somit bietet die Wand des Gehäuses an den meisten Positionen keine ausreichende Wandstärke und somit auch keinen ausreichenden Halt. Verdickungen des Gehäuses sind bei optimierten Gehäuseteilen nur aus Festigkeitsgründen oder Designgründen vorhanden. Diese Verdickungen liegen aber meist nicht in Nähe der Signalquellen, wie Lagerstellen. Somit dürfen sie entweder aus Festigkeitsgründen oder Designgründen nicht angebohrt werden. Außerdem ist nach einem Durchbohren bis ins Innere des Gehäuseteils die Dichtigkeit nur nach Einleitung spezieller Maßnahmen gegeben. Ein nachträgliches Durchbohren der Wand gefährdet sogar das Getriebe, insbesondere wegen Bohrspänen und Undichtigkeit. Die Bohrtiefe muss also kleiner sein als die Dicke des Gehäuseteils im Bereich der entsprechenden Bohrung.

Die erfindungsgemäße Baureihe weist bei der Erfindung jedoch Gehäuseteile auf, die spezielle Verdickungen zum Anmontieren der Sensoren aufweisen. Figur 2 zeigt beispielhaft eine solche Verdickung. Die Innenseite 26 und Außenseite 22 ist mit einer Erhöhung 23 außen und einer Aufdickung 27 innen gestaltet. Dadurch wird die Gewindebohrung 24 angebracht, ohne dass das Gehäuseteil durchgebohrt ist. Die Erhöhung 23 besitzt die Sensorfläche 25, die für flache Sensoren planbearbeitet wird. Sensoren mit Kegelanschluss erhalten das Schwingungssignal über die Senkung der Gewindebohrung 24.

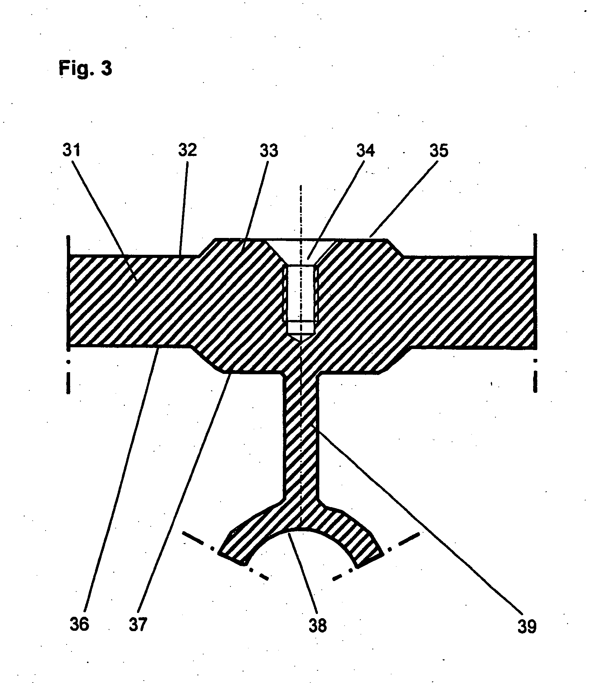

Figur 3 zeigt eine Sensorfläche, die jedoch zusätzlich durch den Steg 39 mit dem Lagerstelle 38 verbunden ist. Die Signalleitung von einem Lager in Lagerstelle 38 zum Sensor wird dadurch besonders gut, da der Steg die Dämpfung verkleinert. In der Figur 3 ist die Gehäusewand nicht eingezeichnet, die aber auch noch vorhanden ist, da die Lagerstelle im Gehäuseteil eingebaut ist. Die Signalleitung vom Lagerstelle über diese Gehäusewand, die dünner als der Steg ist, ist schlechter als die Signalleitung vom Lagerstelle über den Steg zur Sensorfläche. Diese Sensorfläche eignet sich daher besonders gut zur Überwachung speziell des Lagers in Lagerstelle 38. In die Sensorfläche anmontierte Sensoren erfassen das Signal, also den Körperschall, des betreffenden Lagers im Wesentlichen selektiv. D.h., dass Signale anderer Signalquellen, wie weitere Lager mit Lagerstellen, nicht mehr oder nur schwer detektierbar sind, insbesondere ein schlechtes Signal-Rauschverhältnis aufweisen.

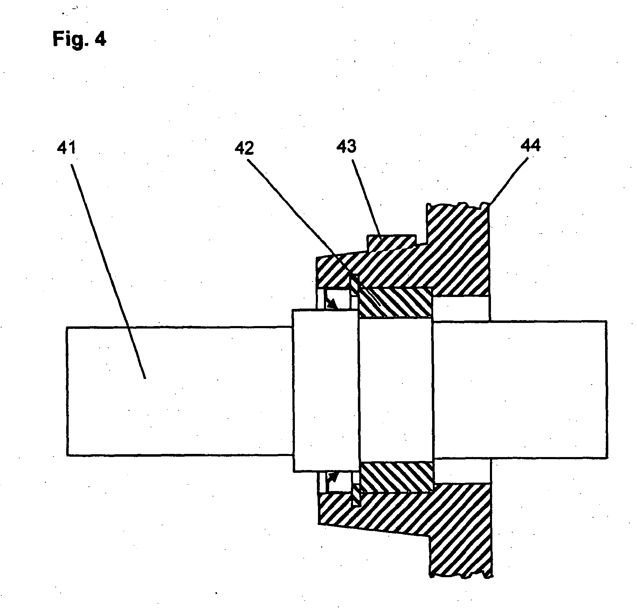

Figur 4 zeigt eine Welle 41, die mittels eines Lagers 42 in einem Gehäuseteil 44 gelagert ist. Das Lager stellt wiederum eine Signalquelle dar. Die Lagerstelle ist außen gekrümmt und weist eine kegelige Außenfläche auf. Die Sensorfläche 43 ist plan und am Lagerstelle positioniert. Somit ist schon im gegossenen, also urgeformten Gehäuseteil 44 die Sensorfläche 43 ausgeführt. In diese Sensorfläche 43 wird dann eine Gewindebohrung mit großer Bohrtiefe eingebracht, wobei die Bohrtiefe größer ist als die Dicke der Lagerstelle. Ein Steg ist bei dieser Position der Sensorfläche 43 nicht notwendig, weil die Sensorfläche 43 direkt an der Lagerstelle angebracht ist.

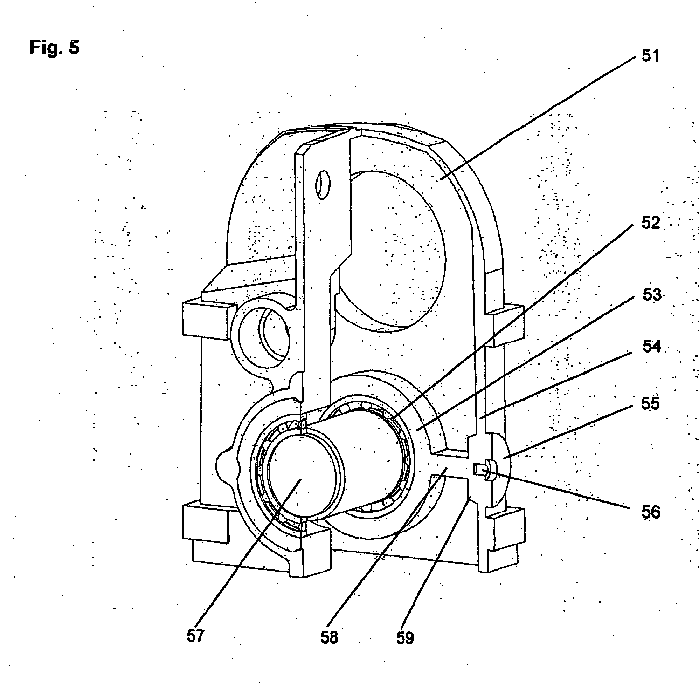

Figur 5 zeigt eine Schnittdarstellung des Gehäuses 51 eines Flachgetriebes. Beispielhaft ist eine Sensorfläche mit Steg 58 versehen. Die Sensorfläche liegt in der Wand 54. Sie besteht aus der erhöhten Sensorfläche 55, der Gewindebohrung 56, der Aufdickung 59 und dem Steg 58, der mit der Lagerstelle 53 direkt verbunden ist.

Als Signalquellen treten bei Antriebssystemen nicht nur Lager auf, sondern auch die im Eingriff stehenden Verzahnungen, spielbehaftete Kupplungen oder Bremsen. Jede dieser Signalquellen überträgt das Signal über eine Welle und über ein Lager zu einem Lagerstelle. Somit wird immer die Lagerstelle als - insbesondere effektive - Signalquelle betrachtet. Bei Körperschall sehr hoher Frequenzen überträgt auch Schmierstoff, wie Öl, Körperschall. Somit ist bei anderen erfindungsgemäßen Ausführungsformen auch ein Sensor derart in eine Verdickung der Wand eines Gehäuseteils anmontierbar, dass ein direkter Kontakt zum Schmierstoff vorhanden ist. Es ist in diesem Fall sogar eine vorhandene Gewindebohrung für Ölverschlussschrauben verwendbar, wobei der Antriebssystem mit derart genügend viel Schmierstoff befüllt wird und in seiner räumlichen Orientierung derart ausgerichtet eingesetzt wird, dass Schmierstoff den in den Innenraum des Gehäuseteils hineinragenden Sensor benetzt und eine Signalleitung von der Signalquelle zum Sensor über den Schmierstoff vorhanden ist, insbesondere auch im Betrieb, also bei drehenden Wellen und Zahnrädern.

Im Betrieb bei drehender Welle 57 gelangen also Schwingungen von einer im Eingriff stehenden, in der Figur 5 nicht dargestellten Verzahnung über die Welle 57 und das Lager 52 auf die Lagerstelle 53. Auch Schwingungen, die im Lager 52 infolge von Wälzvorgängen entstehen, gelangen auf die Lagerstelle 53. Im Wesentlichen durch den Steg 58 werden dann solche Schwingungen einem in der Figur 5 nicht dargestellten Sensor zugeführt, der in die Gewindebohrung 56 eingeschraubt ist.

Bei anderen erfindungsgemäßen Ausführungsbeispielen sind in der Gewindebohrung 56 und/oder an der Sensorfläche 55 Adapter befestigt, die jeweils zum Anschluss eines Sensors dient, beispielsweise mit Schnellverschluss für die Diagnose mit Handgeräten.

Bei anderen erfindungsgemäßen Ausführungsbeispielen ist der Sensor auf die Sensorfläche 55 aufgeklebt.

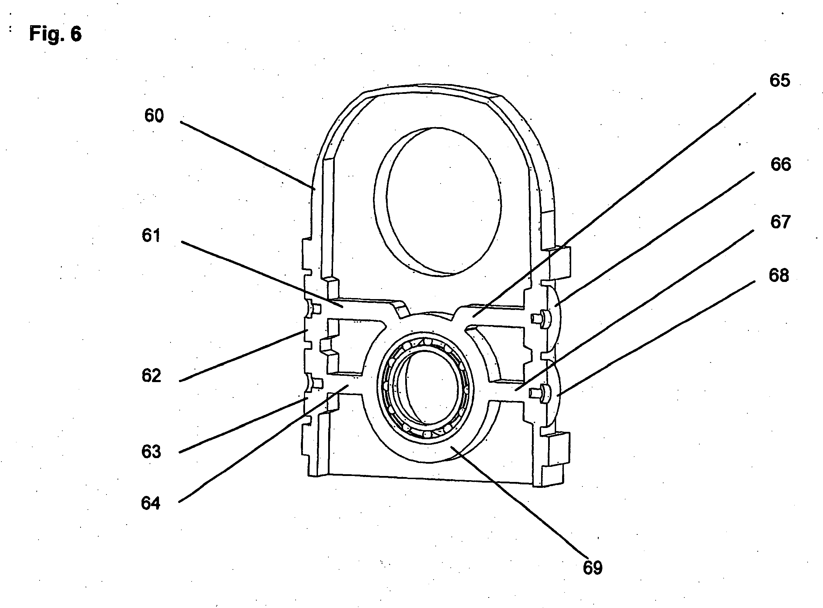

Figur 6 zeigt ein Gehäuse 60, das nicht nur Stege 64, 67 aufweist, die auf kürzestem Weg zur Signalquelle führen, sondern auch umleitende Stege 61, 65, die zu Stellen an der Lagerstelle 69 führen, die eine stärkere Signalquelle bei Auftreten geeignet orientierter Querkräfte an der Welle darstellen. Die Stege 64, 67 und die umleitende Stege 61, 65 führen das Signal zu den Sensorflächen 62, 63, 66, 68.

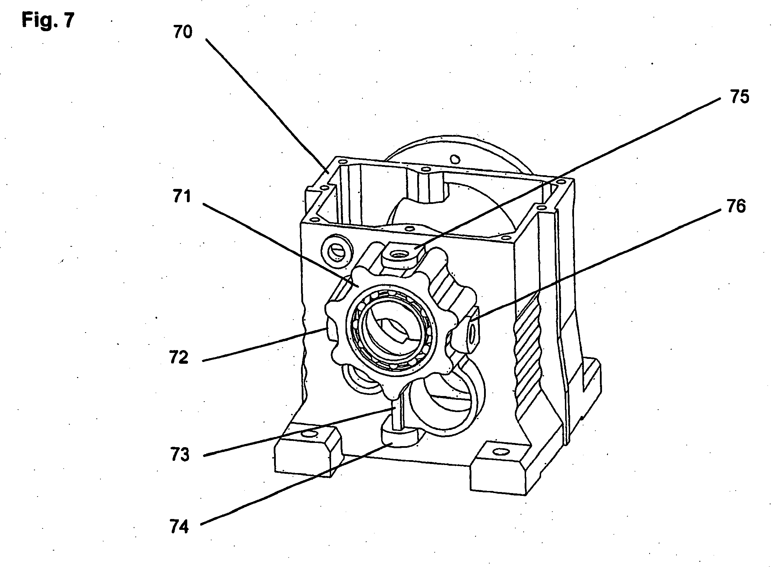

Figur 7 zeigt ein Gehäuse 70, das eine Lagerstelle 71 aufweist, an der Verdickungen derart angebracht sind, dass die Sensorflächen 72, 75, 76 mittels Bearbeitung erzeugbar sind. Die Sensorflächen sind also direkt an der Signalquelle positioniert und der Steg ist in der Lagerstelle und der Verdickung integriert. Nur die Sensorfläche 74 ist über einen Steg 73 mit der Lagerstelle verbunden, weil ein benachbartes Lagerauge den Montageraum für den Sensor verhindert.

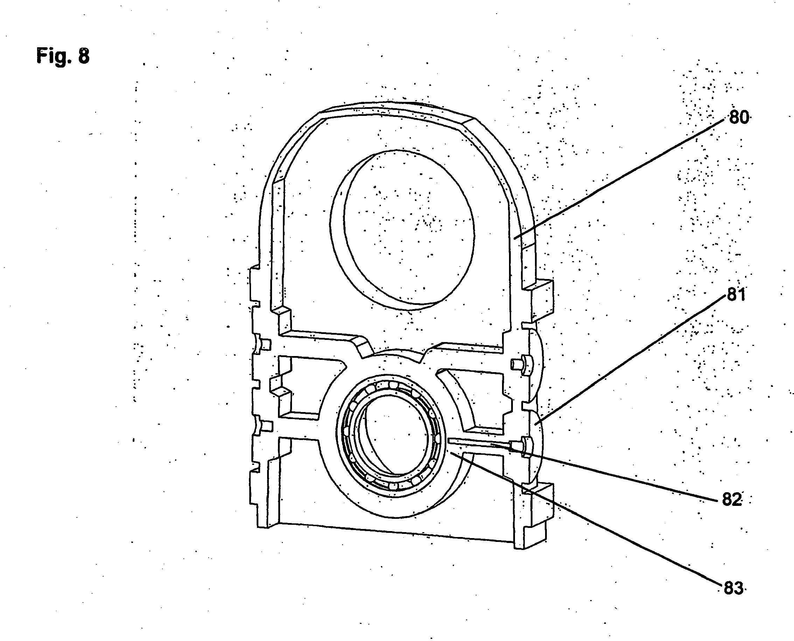

Figur 8 zeigt für ein weiteres erfindungsgemäßes Ausführungsbeispiel eine Temperaturüberwachung des Lagers mittels eines Thermosensors, der für eine Temperaturmessung am Ende der Stegbohrung 82 eingebracht ist. Die Stegbohrung 82 endet kurz vor der Lagerstelle 83.

Bei anderen erfindungsgemäßen Ausführungsbeispielen geht die Stegbohrung bis zum Lagersitz der Lagerstelle 83 durch, ermöglicht also einen direkten Kontakt des Thermosensors mit dem Lager. Dabei wird der Thermosensor derart ausgeführt, dass die Abdichtfunktion erfüllt ist.

Bei anderen erfindungsgemäßen Ausführungsbeispielen wird die Sensorfläche 81 noch mit einer Nut versehen. Dabei wird ein Thermodraht auch bei aufgeklebtem Schwingungssensor nach außen geführt.

Bei anderen erfindungsgemäßen Ausführungsbeispielen ist die Stegbohrung 82 auch derart ausführbar, dass sie an der Gewindebohrung vorbeiläuft.

Bei weiteren erfindungsgemäßen Ausführungsbeispielen ist nicht nur eine Sensorfläche am Gehäuseteil angebracht sondern es sind an verschiedenen Seiten des Gehäuseteils eine oder mehrere Sensorflächen angebracht. Somit ist bei jeder räumlichen Orientierung der Antriebseinheit in der Anwendung immer eine Sensorfläche zugänglich und/oder verwendbar zum Anmontieren eines Sensors.

Bei allen erfindungsgemäßen Ausführungsbeispielen sind die Sensoren in einfacher Weise anbringbar, weil keine Ecken, Kanten oder Krümmungen vorhanden sind. Der Kunde muss sich keine Gedanken machen, wo er möglichst gute Positionen zum Anbringen der Sensorflächen findet, sondern die Positionen sind vom Hersteller schon festgelegt und das Gehäuseteil ist schon entsprechend konstruiert, ausgeführt und vorbereitet, insbesondere durch zusätzliche Stege und/oder Verdickungen, die eine verbesserte Signalleitung und somit eine verbesserte Signalgüte, also ein gutes Signal-/Rausch-Verhältnis, bewirken. Die Flächen sind außerdem schon so ausgeführt, dass eine Bearbeitung überhaupt möglich ist, insbesondere sogar schnell und einfach. Die so vom Hersteller ausgeführten Positionen für Sensorflächen sind bei der Erfindung zumindest an optimalen Stellen festgelegt, wobei im Stand der Technik die meisten dieser Stellen überhaupt nicht verwendbar wären, beispielsweise weil die Wand des Gehäuses an diesen Stellen zu dünn ist oder eine schlechte Signalleitung zu diesen Stellen vorliegt.

## Patentansprüche

1. Antriebssystem mit einem eine Lagerstelle 53 aufweisenden Gehäuseteil (21,31),
**dadurch gekennzeichnet, dass**
mindestens ein Gehäuseteil (21,31) eine plane Sensorfläche (25,35) aufweist, an der ein KörperschallSensor anmontierbar ist,
wobei die Position der Sensorfläche (25,35) derart vorgesehen ist, dass von einer ersten Lagerstelle zur Sensorfläche (25,35) eine bessere Signalleitung vorhanden ist als von weiteren Lagerstellen und/oder Positionen von Signalquellen zur Sensorfläche,
wobei die bessere Signalleitung durch eine Verdickung, einen Gusssteg oder eine entsprechende besondere Formung bewirkt ist.

2. Antriebssystem nach Anspruch 1,
**dadurch gekennzeichnet, dass**
das Gehäuseteil mindestens zwei, zueinander parallele und derart angeordnete Sensorflächen aufweist, dass die Bearbeitung gleichzeitig, insbesondere mit einer Mehrspindelmaschine, ausführbar ist.

3. Baureihe von Antriebssystemen,
wobei die Baureihe mindestens eine Baugröße umfasst, die mindestens eine Variante umfasst,
wobei die Variante jeweils mindestens ein Gehäuseteil (21,31) umfasst,
**dadurch gekennzeichnet, dass**
mindestens ein Gehäuseteil (21,31) mindestens einer Variante **in der Urform** mindestens eine Sensorfläche (25,35) aufweist, die
- in einer ersten Variante nicht bearbeitet ist und
- bei einer zweiten Variante derart bearbeitet ist, dass nach dieser Bearbeitung ein Anmontieren eines Sensors ausführbar ist, wobei die Position der Sensorfläche (25,35) derart vorgesehen ist, dass von einer ersten Lagerstelle (53) zur Sensorfläche eine bessere Signalleitung vorhanden ist als von weiteren Lagerstellen und/oder Positionen von Signalquellen zur Sensorfläche, wobei die Sensorfläche Mittel zur Identifikation oder Bezeichnung aufweist und/oder mit Mitteln zur Identifikation oder Bezeichnung direkt in Verbindung steht.

4. Baureihe nach mindesten einem der vorangegangenen Ansprüche,
**dadurch gekennzeichnet, dass**
die Antriebssysteme Getriebe, Motoren, Generatoren, Getriebemotoren, Ventilatoren, Pumpen,
wobei die Getriebe Stirnrad-, Zyklo-, Kegelrad-, Schnecken- und/oder Verstellgetriebestufen umfassen.

5. Baureihe nach mindesten einem der vorangegangenen Ansprüche,
**dadurch gekennzeichnet, dass**
das Gehäuseteil mindestens einer Variante nach dem Gießen eine Sensorfläche aufweist, die derart bearbeitbar ist, dass nach der Bearbeitung ein Anmontieren mindestens eines Sensors ausführbar ist

6. Baureihe nach mindesten einem der vorangegangenen Ansprüche,
**dadurch gekennzeichnet, dass**
das Bearbeiten ein Entfetten, ein Lackentfemen, ein Aufrauen und/oder mindestens eine spanende Bearbeitung ist, wie Fräsen, Drehen, Schleifen, Bohren, Feilen, Abschmirgeln, Gewindeschneiden, Hobeln, Schaben

7. Baureihe nach mindesten einem der vorangegangenen Ansprüche,
**dadurch gekennzeichnet, dass**
die Sensorfläche über das Gehäuseteil derart hinausstehend ist, dass sie mit einem Werkzeug, insbesondere einem Fräser, bearbeitbar ist, der größer ist als die Sensorfläche

8. Baureihe nach mindesten einem der vorangegangenen Ansprüche,
**dadurch gekennzeichnet, dass**
die Sensorfläche in einem planen Bereich des Gehäuseteils liegt oder ins Gehäuseteil derart vertieft liegt, dass sie mit einem Werkzeug, insbesondere einem Fräser oder einem Flachsenker, bearbeitbar ist.

9. Baureihe nach mindesten einem der vorangegangenen Ansprüche,
**dadurch gekennzeichnet, dass**
die jeweilige Sensorfläche eine derartige Größe und/oder einen derartigen Durchmesser aufweist, dass ein Sensor mittels Anschrauben an das Gehäuseteil anmontierbar ist.

10. Baureihe nach mindesten einem der vorangegangenen Ansprüche,
**dadurch gekennzeichnet, dass**
das Gehäuseteil im Bereich der Sensorfläche derart verdickt ist, dass eine Bohrung derart tief ausführbar ist, dass ein Sensor mittels Anschrauben an das Gehäuseteil anmontierbar ist.

11. Baureihe nach mindesten einem der vorangegangenen Ansprüche,
**dadurch gekennzeichnet, dass**
das Gehäuseteil im Bereich der Sensorfläche derart verdickt ist, dass eine Bohrung tiefer ausführbar ist als die größte Dicke des Gehäuseteils in unmittelbarer Umgebung des Bereiches der Sensorfläche

12. Baureihe nach mindesten einem der vorangegangenen Ansprüche,
**dadurch gekennzeichnet, dass**
die Sensorfläche Mittel zur Zentrierung, wie urgeformte Vertiefung, für das Anbringen einer Bohrung aufweist.

13. Baureihe nach mindesten einem der vorangegangenen Ansprüche,
**dadurch gekennzeichnet, dass**
das Gehäuseteil im Bereich der Sensorfläche derart magnetisch und/oder ferromagnetisch ist und/oder ein magnetisches Teil umfasst, dass ein Sensor magnetisch an das Gehäuseteil angezogen wird und/oder anmontierbar ist.

14. Baureihe nach mindesten einem der vorangegangenen Ansprüche,
**dadurch gekennzeichnet, dass**
das Gehäuseteil Eisen aufweist oder aus Aluminimumdruckguss ist.

15. Baureihe nach mindesten einem der vorangegangenen Ansprüche,
**dadurch gekennzeichnet, dass**
das Gehäuseteil mindestens eine Lagerstelle umfasst.

16. Baureihe nach mindesten einem der vorangegangenen Ansprüche,
**dadurch gekennzeichnet, dass**
die Position der Sensorfläche derart vorgesehen ist, dass von einer Lagerstelle zur Sensorfläche eine bessere Signalleitung vorhanden ist als von der Lagerstelle zu mindestens einer anderen Position an der Außenfläche des Gehäuseteils,

17. Baureihe nach mindesten einem der vorangegangenen Ansprüche,
**dadurch gekennzeichnet, dass**
die bessere Signalleitung durch eine Verdickung, einen Gusssteg oder eine besondere Formung bewirkt ist.

18. Baureihe nach mindesten einem der vorangegangenen Ansprüche,
**dadurch gekennzeichnet, dass**
die Position der Sensorfläche derart ist, dass von der Lagerstelle zur Sensorfläche keine Fügestellen vorhanden sind.

19. Baureihe nach mindesten einem der vorangegangenen Ansprüche,
**dadurch gekennzeichnet, dass**
die Position der Sensorfläche derart ist, dass Signale der ersten Lagerstelle oder einer ersten Gruppe von Lagerstellen selektiv detektierbar sind.

20. Baureihe nach mindesten einem der vorangegangenen Ansprüche,
**dadurch gekennzeichnet, dass**
die Mittel zur Identifikation oder Bezeichnung mindestens eine Beschriftung, eine Nummerierung, Etikettierung, Stempelung, Bedruckung, ein Typenschild und/oder ein berührungsloses Identifikationssystem mit Oberflächenwellensensoren oder mit Transpondern sind.

21. Baureihe nach mindesten einem der vorangegangenen Ansprüche,
**dadurch gekennzeichnet, dass**
die Fläche Mittel zur Zugentlastung, insbesondere für ein Sensoranschlusskabel aufweist.

22. Baureihe nach mindesten einem der vorangegangenen Anspruche,
**dadurch gekennzeichnet, dass**
der Sensor ein Körperschallsensor ist.

23. Baureihe nach mindesten einem der vorangegangenen Ansprüche,
**dadurch gekennzeichnet, dass**
der Sensor derart gestaltet ist, dass Körperschall mit mindestens einer Frequenz aus dem Bereich von 1 Hz bis 10 MHz detektierbar ist.

24. Baureihe nach mindesten einem der vorangegangenen Ansprüche,
**dadurch gekennzeichnet, dass**
ein erster Sensor ein Körperschallsensor ist und ein zweiter Sensor ein Thermodraht ist.

25. Baureihe nach mindesten einem der vorangegangenen Ansprüche,
**dadurch gekennzeichnet, dass**
an einer Sensorfläche mehrere Sensoren, wie mindestens ein Körperschallsensor, mindestens ein Thermosensor und/oder mindestens ein Ölzustandssensor, anmontierbar sind.

26. Baureihe nach mindesten einem der vorangegangenen Ansprüche,
**dadurch gekennzeichnet, dass**
das Gehäuseteil mindestens zwei, zueinander parallele und derart angeordnete Sensorflächen aufweist, dass die Bearbeitung gleichzeitig, insbesondere mit einer Mehrspindelmaschine, ausführbar ist.

27. Baureihe nach mindesten einem der vorangegangenen Ansprüche,
**dadurch gekennzeichnet, dass**
Sensorflächen bei verschiedenen Varianten und/oder Baugrößen sich derart an derselben geometrischen Position befinden, dass für die verschiedenen Varianten und/oder Baugrößen dieselben Mittel zur Bearbeitung und Mittel zum Ablesen von Informationen verwendbar sind

28. Baureihe nach mindesten einem der vorangegangenen Ansprüche,
**dadurch gekennzeichnet, dass**
mindestens eine Sensorfläche in einer Ebene mit Fußflächen des Getriebes liegt und somit gleichzeitig mit den Fußflächen bearbeitbar ist.

29. Baureihe nach mindesten einem der vorangegangenen Ansprüche,
**dadurch gekennzeichnet, dass**
mindestens eine Fußfläche als Sensorfläche des Getriebes ausgeführt ist.

30. Baureihe nach mindesten einem der vorangegangenen Ansprüche,
**dadurch gekennzeichnet, dass**
die Bohrtiefe für eine Gewindebohrung zum Anschrauben eines Sensors an der Sensorfläche der DIN 76 genügt

31. Baureihe nach mindesten einem der vorangegangenen Ansprüche,
**dadurch gekennzeichnet, dass**
die Bohrtiefe größer ist als 14 mm für eine Gewindebohrung zum Anschrauben eines Sensors an der Sensorfläche.

32. Baureihe nach mindesten einem der vorangegangenen Ansprüche,
**dadurch gekennzeichnet, dass**
das Gehäuseteil im Bereich der Sensorfläche **zur Verbesserung der Signalleitung** und/oder zum **Einbringen einer Bohrung** eine größere Dicke aufweist als die Dicke, die sich nach der Festigkeitslehre unter Minimierung des eingesetzten Materials und/oder nach Ausführen von Industrie-Design ergibt.

## Claims

1. A drive system with a housing part (21, 31) having a bearing location 53,
**characterized in that**
at least one housing part (21, 31) has a plane sensor face (25, 35) on which a structure-borne-noise sensor is capable of being mounted,
wherein the position of the sensor face (25, 35) is provided in such a way that a better signal transmission is present from a first bearing location to the sensor face (25, 35) than from further bearing locations and/or positions of signal sources to the sensor face,
wherein the better signal transmission is produced by a thickened portion, a cast web or a suitable special shaping.

2. A drive system according to Claim 1, **characterized in that** the housing part has at least two sensor faces which are parallel to each other and which are arranged in such a way that the treatment is capable of being carried out simultaneously, in particular with a multiple-spindle machine.

3. A product range of drive systems,
wherein the product range comprises at least one structural size which comprises at least one variant,
wherein the variant comprises at least one housing part (21, 31) in each case,
**characterized in that**
at least one housing part (21, 31) of at least one variant in the primary shape has at least one sensor face (25, 35) which
in a first variant is not treated and
in a second variant is treated in such a way that after this treatment it is possible for the mounting of a sensor to be carried out, wherein the position of the sensor face (25, 35) is provided in such a way that a better signal transmission is present from a first bearing location (53) to the sensor face than from further bearing locations and/or positions of signal sources to the sensor face, wherein the sensor face has means for identification or designation and/or is connected to means for identification or designation.

4. A product range according to at least one of the preceding Claims, **characterized in that** the drive systems [comprise] gearboxes, motors, generators, gear motors, ventilators and pumps, wherein the gearboxes comprise spur-gear, cyclo-gear, bevel-gear, worm-gear and/or adjustment-gear stages.

5. A product range according to at least one of the preceding Claims, **characterized in that** after the casting the housing part of at least one variant has a sensor face which is capable of being treated in such a way that after the treatment it is possible for the mounting of at least one sensor to be carried out.

6. A product range according to at least one of the preceding Claims, **characterized in that** the treatment is a degreasing, a paint removal, a roughening and/or at least one metal-cutting treatment, such as milling, turning, grinding, boring, filing, sanding, thread-cutting, planing or scraping.

7. A product range according to at least one of the preceding Claims, **characterized in that** the sensor face projects beyond the housing part in such a way that it is capable of being treated with a tool, in particular a milling tool, which is larger than the sensor face.

8. A product range according to at least one of the preceding Claims, **characterized in that** the sensor face is situated in a plane region of the housing part or is recessed into the housing part in such a way that it is capable of being treated with a tool, in particular a milling tool or a piloted counterbore.

9. A product range according to at least one of the preceding Claims, **characterized in that** the respective sensor face has such a size and/or such a diameter that a sensor is capable of being mounted on the housing part by being screwed on.

10. A product range according to at least one of the preceding Claims, **characterized in that** the housing part is thickened in the region of the sensor face in such a way that a bore is capable of being produced to such a depth that a sensor is capable of being mounted on the housing part by being screwed on.

11. A product range according to at least one of the preceding Claims, **characterized in that** the housing part is thickened in the region of the sensor face in such a way that a bore is capable of being produced to a greater depth than the greatest thickness of the housing part in the immediate vicinity of the region of the sensor face.

12. A product range according to at least one of the preceding Claims, **characterized in that** the sensor face has means for centring, such as primary-shaped recessing, for the formation of a bore.

13. A product range according to at least one of the preceding Claims, **characterized in that** the housing part in the region of the sensor face is magnetic and/or ferromagnetic and/or has a magnetic part in such a way that a sensor is drawn onto and/or is capable of being mounted on the housing part magnetically.

14. A product range according to at least one of the preceding Claims, **characterized in that** the housing part has iron or is of aluminium die-casting.

15. A product range according to at least one of the preceding Claims, **characterized in that** the housing part comprises at least one bearing location.

16. A product range according to at least one of the preceding Claims, **characterized in that** the position of the sensor face is provided in such a way that a better signal transmission is present from a bearing location to the sensor face than from the bearing location to at least one other position on the outer face of the housing part.

17. A product range according to at least one of the preceding Claims, **characterized in that** the better signal transmission is produced by a thickened portion, a cast web or a special shaping.

18. A product range according to at least one of the preceding Claims, **characterized in that** the position of the sensor face is such that no joints are present from the bearing location to the sensor face.

19. A product range according to at least one of the preceding Claims, **characterized in that** the position of the sensor face is such that signals of the first bearing location or a first group of bearing locations are capable of being detected in a selective manner¹
¹ Sentence incomplete in original German text.

20. A product range according to at least one of the preceding Claims, **characterized in that** the means for identification or designation are at least one inscription, a numbering, a labelling, a stamping, a printed caption, an identification plate and/or a contact-less identification system with surface-wave sensors or with transponders.

21. A product range according to at least one of the preceding Claims, **characterized in that** the face has means for strain relief, in particular for a sensor-attachment cable.

22. A product range according to at least one of the preceding Claims, **characterized in that** the sensor is a structure-borne-noise sensor.

23. A product range according to at least one of the preceding Claims, **characterized in that** the sensor is designed in such a way that structure-borne noise with at least a frequency from the range of from 1 Hz to 10 MHz is capable of being detected.

24. A product range according to at least one of the preceding Claims, **characterized in that** a first sensor is a structure-borne-noise sensor and a second sensor is a thermo wire.

25. A product range according to at least one of the preceding Claims, **characterized in that** a plurality of sensors, such as at least one structure-borne-noise sensor, at least one heat sensor and/or at least one oil-level sensor, are capable of being mounted on a sensor face.

26. A product range according to at least one of the preceding Claims, **characterized in that** the housing part has at least two sensor faces which are parallel to each other and which are arranged in such a way that the treatment is capable of being carried out simultaneously, in particular with a multiple-spindle machine.

27. A product range according to at least one of the preceding Claims, **characterized in that** sensor faces are present in different variants and/or structural sizes in the same geometrical position in such a way that the same means for treatment and means for reading off information are capable of being used for the different variants and/or structural sizes.

28. A product range according to at least one of the preceding Claims, **characterized in that** at least one sensor face is situated in one plane with base faces of the gearbox and is thus capable of being treated at the same time as the base faces.

29. A product range according to at least one of the preceding Claims, **characterized in that** at least one base face is constructed in the form of a sensor face of the gearbox.

30. A product range according to at least one of the preceding Claims, **characterized in that** the boring depth for a threaded bore for screwing a sensor to the sensor face meets *DIN*¹ 76.
*¹ Deutsches Institut für Normung e.V*.- German Institute for Standardization.

31. A product range according to at least one of the preceding Claims, **characterized in that** the boring depth is greater than 14 mm for a threaded bore for screwing a sensor to the sensor face.

32. A product range according to at least one of the preceding Claims, **characterized in that** the housing part in the region of the sensor face for improving the signal transmission and/or for forming a bore has a greater thickness than the thickness which results in accordance with the theory of the strength of materials whilst the material used is minimized and/or after the industrial design has been implemented.

## Revendications

1. Système d'entraînement avec une partie de boîtier (21, 31) présentant un point d'appui (53),
**caractérisé en ce qu'**au moins une partie de boîtier (21, 31) présente une surface de capteur plane (25, 35), sur laquelle peut être monté un capteur de bruit structurel,
sachant que l'emplacement de la surface de capteur (25, 35) est prévu de telle sorte qu'il existe une meilleure conduction du signal d'un premier point d'appui vers la surface de capteur (25, 35) que depuis d'autres points d'appui et/ou emplacements de sources de signaux vers la surface de capteur,
sachant que la meilleure conduction du signal est produite par un épaississement, une entretoise moulée ou une conformation particulière correspondante.

2. Système d'entraînement selon la revendication 1, **caractérisé en ce que** la partie de boîtier présente au moins deux surfaces de capteur mutuellement parallèles et disposées de telle sorte que l'usinage peut être effectué simultanément, notamment avec une machine multibroche.

3. Gamme de systèmes d'entraînement,
sachant que la gamme comprend au moins une taille qui comprend au moins une variante,
sachant que la variante comprend respectivement au moins une partie de boîtier (21, 31),
**caractérisée en ce qu'**au moins une partie de boîtier (21, 31) d'au moins une variante présente dans sa forme initiale au moins une surface de capteur (25, 35) qui
- dans une première variante, n'est pas usinée, et
- dans une deuxième variante, est usinée de telle sorte qu'on peut effectuer à la suite de cet usinage le montage d'un capteur, sachant que l'emplacement de la surface de capteur (25, 35) est prévu de telle sorte qu'il existe une meilleure conduction du signal d'un premier point d'appui (53) vers la surface de capteur (25, 35) que depuis d'autres points d'appui et/ou emplacements de sources de signaux vers la surface de capteur, sachant que la surface de capteur présente des moyens d'identification ou de désignation et/ou est directement reliée à des moyens d'identification ou de désignation.

4. Gamme selon au moins une des revendications précédentes, **caractérisée en ce que** les systèmes d'entraînement comprennent des transmissions, des moteurs, des générateurs, des motoréducteurs, des ventilateurs, des pompes, sachant que les transmissions comprennent des étages de transmission à engrenage droit, à engrenage cycloïdal, à engrenage conique, à vis sans fin et/ou à variation.

5. Gamme selon au moins une des revendications précédentes, **caractérisée en ce que** la partie de boîtier d'au moins une variante présente à la suite du moulage une surface de capteur qui peut être usinée de telle sorte qu'on peut effectuer à la suite de l'usinage le montage d'au moins un capteur.

6. Gamme selon au moins une des revendications précédentes, **caractérisée en ce que** l'usinage est un dégraissage, une élimination de vernis, un grattage et/ou au moins un usinage par enlèvement de matière, tel que fraisage, usinage au tour, meulage, perçage, limage, ponçage, taraudage, rabotage, raclage.

7. Gamme selon au moins une des revendications précédentes, **caractérisée en ce que** la surface de capteur dépasse au-delà de la partie de boîtier de telle sorte qu'elle peut être usinée avec un outil, notamment une fraise, qui est plus grand que la surface de capteur. ,

8. Gamme selon au moins une des revendications précédentes, **caractérisée en ce que** la surface de capteur se trouve dans une région plane de la partie de boîtier ou se trouve en retrait dans la partie de boîtier de telle sorte qu'elle peut être usinée avec un outil, notamment une fraise ou un foret aléseur.

9. Gamme selon au moins une des revendications précédentes, **caractérisée en ce que** la surface de capteur respective présente une taille telle et/ou un diamètre tel qu'un capteur peut être monté par vissage sur la partie de boîtier.

10. Gamme selon au moins une des revendications précédentes, **caractérisée en ce que** la partie de boîtier est épaissie dans la région de la surface de capteur de telle sorte qu'un perçage peut être réalisé avec une profondeur telle qu'un capteur peut être monté par vissage sur la partie de boîtier.

11. Gamme selon au moins une des revendications précédentes, **caractérisée en ce que** la partie de boîtier est épaissie dans la région de la surface de capteur de telle sorte qu'un perçage peut être réalisé plus profond que l'épaisseur maximale de la partie de boîtier dans l'environnement immédiat de la région de la surface de capteur.

12. Gamme selon au moins une des revendications précédentes, **caractérisée en ce que** la surface de capteur présente des moyens de centrage, tels qu'un renfoncement réalisé dans sa forme initiale, pour ménager un perçage.

13. Gamme selon au moins une des revendications précédentes, **caractérisée en ce que** la partie de boîtier, dans la région de la surface de capteur, est magnétique et/ou ferromagnétique et/ou comprend une partie magnétique de telle sorte qu'un capteur peut être monté et/ou est attiré magnétiquement sur la partie de boîtier.

14. Gamme selon au moins une des revendications précédentes, **caractérisée en ce que** la partie de boîtier présente du fer ou est en fonte d'aluminium.

15. Gamme selon au moins une des revendications précédentes, **caractérisée en ce que** la partie de boîtier comprend au moins un point d'appui.

16. Gamme selon au moins une des revendications précédentes, **caractérisée en ce que** l'emplacement de la surface de capteur est prévu de telle sorte qu'il existe une meilleure conduction du signal d'un point d'appui vers la surface de capteur que depuis le point d'appui vers au moins un autre emplacement sur la surface extérieure de la partie de boîtier.

17. Gamme selon au moins une des revendications précédentes, **caractérisée en ce que** la meilleure conduction du signal est produite par un épaississement, une entretoise moulée ou une conformation particulière.

18. Gamme selon au moins une des revendications précédentes, **caractérisée en ce que** l'emplacement de la surface de capteur est tel qu'il n'existe pas de joints entre le point d'appui et la surface de capteur.

19. Gamme selon au moins une des revendications précédentes, **caractérisée en ce que** l'emplacement de la surface de capteur est tel que des signaux du premier point d'appui ou d'un premier groupe de points d'appui peuvent être sélectivement détectés.

20. Gamme selon au moins une des revendications précédentes, **caractérisée en ce que** les moyens d'identification ou de désignation sont au moins une légende, une numérotation, un étiquetage, un estampillage, une impression, une plaque signalétique et/ou un système d'identification sans contact avec des capteurs d'ondes de surface ou avec des transpondeurs.

21. Gamme selon au moins une des revendications précédentes, **caractérisée en ce que** la surface présente des moyens de soulagement de traction, notamment pour un câble de raccordement de capteur.

22. Gamme selon au moins une des revendications précédentes, **caractérisée en ce que** le capteur est un capteur de bruit structurel.

23. Gamme selon au moins une des revendications précédentes, **caractérisée en ce que** le capteur est conçu de telle sorte que du bruit structurel ayant au moins une fréquence dans la plage de 1 Hz à 10 MHz peut être détecté.

24. Gamme selon au moins une des revendications précédentes, **caractérisée en ce qu'**un premier capteur est un capteur de bruit structurel et un deuxième capteur est un fil pour couples thermoélectriques.

25. Gamme selon au moins une des revendications précédentes, **caractérisée en ce que** plusieurs capteurs peuvent être montés sur une surface de capteur, comme au moins un capteur de bruit structurel, au moins un capteur thermique et/ou au moins un capteur d'état d'huile.

26. Gamme selon au moins une des revendications précédentes, **caractérisée en ce que** la partie de boîtier présente au moins deux surfaces de capteur mutuellement parallèles et disposées de telle sorte que l'usinage peut être effectué simultanément, notamment avec une machine multibroche.

27. Gamme selon au moins une des revendications précédentes, **caractérisée en ce que** des surfaces de capteur pour différentes variantes et/ou tailles se trouvent au même emplacement géométrique de telle sorte qu'on peut utiliser pour les différentes variantes et/ou tailles les mêmes moyens d'usinage et les mêmes moyens de lecture d'informations.

28. Gamme selon au moins une des revendications précédentes, **caractérisée en ce qu'**au moins une surface de capteur se trouve dans un plan avec des surfaces de base de la transmission et peut ainsi être usinée en même temps que les surfaces de base.

29. Gamme selon au moins une des revendications précédentes, **caractérisée en ce qu'**au moins une surface de base est conçue comme surface de capteur de la transmission.

30. Gamme selon au moins une des revendications précédentes, **caractérisée en ce que** la profondeur de perçage pour un perçage fileté destiné à visser un capteur sur la surface de capteur satisfait à DIN 76.

31. Gamme selon au moins une des revendications précédentes, **caractérisée en ce que** la profondeur de perçage pour un perçage fileté destiné à visser un capteur sur la surface de capteur est supérieure à 14 mm.

32. Gamme selon au moins une des revendications précédentes, **caractérisée en ce que** la partie de boîtier présente dans la région de la surface de capteur, afin d'améliorer la conduction du signal et/ou de ménager un perçage, une plus grande épaisseur que l'épaisseur qui est obtenue d'après des considérations de résistance des matériaux, avec minimisation du matériau utilisé, et/ou d'après des considérations d'esthétisme industriel.
